# EUROPEAN PATENT SPECIFICATION

(11) **EP 1 902 454 B1**
(45) Date of publication and mention of the grant of the patent: **09.04.2014**
(21) Application number: 06741484.7
(22) Date of filing: 11.05.2006
(51) Int. Cl.: H01H 13/705, G07F 7/10, G06F 21/86, G08B 13/06, G08B 13/14

(54) **TAMPER SWITCH ACTUATOR ARRANGEMENT**
BETÄTIGUNGSANORDNUNG FÜR EINEN SICHERHEITSSCHALTER
AGENCEMENT D'ACTIONNEUR POUR UN INTERRUPTEUR DE SÉCURITÉ

(30) Priority: 14.06.2005 CA 2509925
(43) Date of publication of application: 26.03.2008
(73) Proprietor: Ingenico Canada Ltd., Toronto ON M3L 1G5 (CA)
(72) Inventor: QUINQUE, Herve, F-92370 CHAVILLE (FR); YUEN, Ki, Sheung, Brampton, Ontario L6S 5E1 (CA); COCHRAN, Craig, J., Atlanta, GA 30318 (US)
(74) Representative: Schmid, Wolfgang
(86) International application number: PCT/CA2006/000769
(87) International publication number: WO 2006/133540

(56) References cited:
- FR-A1- 2 860 643
- US-A- 3 962 556
- US-A- 4 331 945
- US-A- 4 599 498
- US-A- 5 386 091
- US-A1- 2005 219 046

## Description

### FIELD OF THE INVENTION

The present invention relates to financial transaction terminals and other devices having a split casing and requiring a security arrangement to respond unauthorized access to the device.

### BACKGROUND OF THE INVENTION

A number of different devices are subject to possible tampering and fraudulent activities. Financial transaction terminals, PIN pads and other related monetary devices are particularly vulnerable and a number of different security arrangements have been proposed to reduce the possibility of tampering. Many of these devices are used in non-secure environments such that protection is more difficult.

Some security arrangements as disclosed for example in FR 2 860 643 A1 include a switch arrangement associated with a printed circuit board. The switch is maintained in a conducting condition by a mechanical securement force maintaining a split case device secured. If a mechanical arrangement securing the casings is released and the split case opened, the switch moves to a non-conducting condition and the terminal appropriately shutdown and assumes an electronically secure condition.

With prior art tamper switch arrangements there is the possibility of compromising the switch to maintain the switch in a conducting position even though the casing has been opened. In some arrangements it is possible to slide a conducting member into an appropriate position on the circuit board to maintain the conducting condition. Guard conductors are sometimes provided on the circuit board to detect such a conductor. Although this assists in protecting the tamper switch arrangement it is not entirely satisfactory.

Most tamper indicating switches include a spring bias that is compressed when the split casing is in an assembled condition. The spring bias assists in maintaining a conducting condition but reduces the sensitivity of the switch when the casing is opened. Therefore, there is trade off between reliability in maintaining the conducting condition and sensitivity to respond to unauthorized access.

US 5 386 091 A discloses a switch having a stiff outer sleeve provided about a resilient compressible member having a movable contact at one end.

The present invention provides a tamper switch arrangement that accommodates expected tolerances between the two case components while also providing a secure tamper switch.

### SUMMARY OF THE PRESENT INVENTION

A tamper switch actuator arrangement according to the present invention comprises a resilient compressible member, a displaceable contact member with an electrical conducting surface at one end thereof and a stiff outer sleeve provided about the displaceable contact member. The compressible member in a non-compressed state causes the displaceable member to assume a non-conducting state within the outer sleeve. The displaceable member is movable within the outer sleeve to a conducting position adjacent an end of the sleeve when an axial force is applied to an end of the displaceable contact member opposite the electrical conducting surface.

According to an aspect of the invention in a non-compressed state of the resilient compressible member an end of the displaceable contact member opposite the conducting surface is generally co-planer with a surface of the compressible member opposite the outer sleeve.

In yet a further aspect of the invention the resilient compressible member is integral with the displaceable contact member.

In a further aspect of the invention the displaceable contact member includes a cylindrical body portion moveable axially within the outer sleeve with the cylindrical body portion including a compressible region above the conducting surface.

In yet a further aspect of the invention a displaceable contact member is of a length less than the length of the outer sleeve.

According to an aspect of the invention the cylindrical body portion is closed at one end by the conducting surface.

According to an aspect of the invention the switch actuator arrangement includes a force transfer washer positioned to one side of the compressible member and the displaceable contact member whereby the compressible member is located between the force transfer washer and the outer sleeve.

In a different aspect of the invention the compressible member and the displaceable contact member are integral and are joined by tubular body portion positioned within the sleeve and a thin web spring arrangement joins the tubular body portion and the displaceable member. This results in biasing of the displaceable member towards the non-conducting position until the compressible member is compressed. The displaceable member is generally centered within the tubular body portion and moves to a conducting position after a predetermined compression of said compressible member.

With this arrangement initial compression of the compressible member merely moves the displaceable contact member towards the conducting position. Further compression results in a conducting condition. With this arrangement the displaceable contact member moves to a non-conducting position during initial separation of the casing while the compression member is still under compression. This compression helps maintain the protective sleeve about the displaceable member as it is being biased by the compressible member.

### BRIEF DESCRIPTION OF THE DRAWINGS

The above as well as other advantages and features of the present invention will be described in greater detail according to the preferred embodiments of the present invention in which;
Figure 1 is sectional view through a financial transaction terminal;
Figure 2 is a partial sectional view showing the top and bottom casings of the terminal mechanically secured to one another with the tamper switch arrangement engaging the circuit board;
Figure 3 is a partial sectional view showing further details of the tamper switch actuator arrangement with one such arrangement provided at either side of the circuit board;
Figure 4 is a perspective view of actuating portion of the tamper switch actuator;
Figure 5 is a sectional view through a member of Figure 4;
Figure 6 is an exploded perspective view showing the actuating mechanism, the outer sleeve and the top force transfer member;
Figure 7 is a view similar to Figure 6 with the various components in an assembled relationship;
Figure 8 is a perspective view of the assembled components;
Figure 9 is a partial sectional view showing two opposed tamper switches;
Figure 10 is an illustrative view of the circuit board with a series of via holes;
Figure 11 is a top view of a security trace; and
Figure 12 is a view of the security trace in relation to a displaceable contact member.

### DETAILED DESCRIPTION ACCORDING TO THE PREFERRED EMBODIMENTS OF THE PRESENT INVENTION IN WHICH:

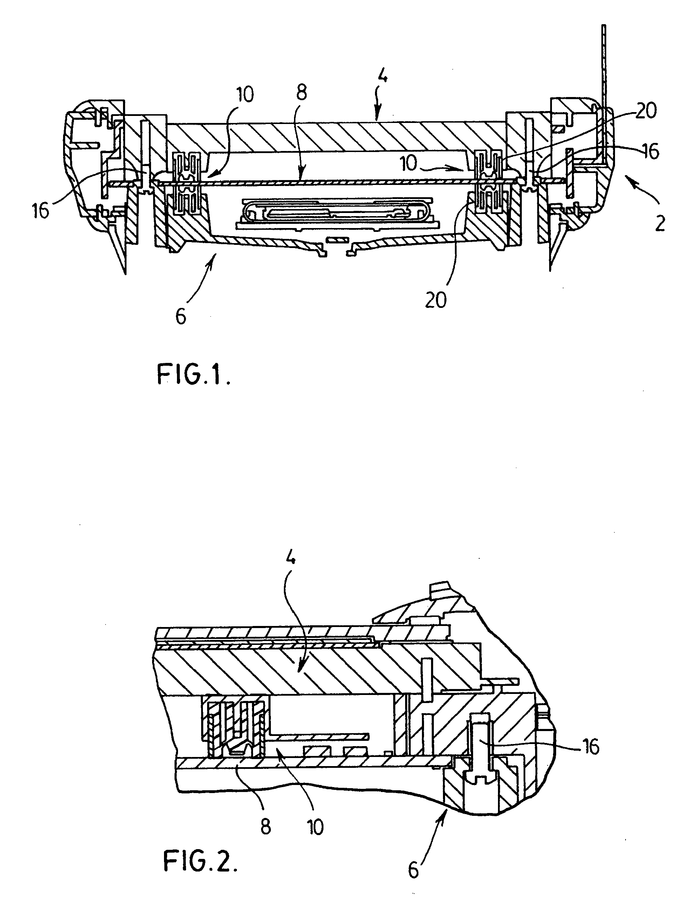

The financial transaction terminal 2 as shown in Figure 1 has a split casing defined by a top casing 4 mechanically secured to a bottom casing 6. A circuit board 8 is provided interior to the terminal and is protected by means of the tamper switch 10. The top and bottom casings are held together by one or more mechanical connections 16. Preferably a tamper switch 10 is provided on each side of the circuit board 8 in opposed relationship. This double switch arrangement assumes a non-conducting position if either of the switches is activated. The terminal assumes a security breech has occurred and automatically initiates an appropriate electronic action with a change in either switch. In many cases, this electronic action is a secure shutdown of the device.

As shown in Figure 1, the tamper switch 10 is preferably provided in close proximity to one of the mechanical connections. Basically, the tamper switch 10 is held in a compressed state by means of the mechanical connection securing the top and bottom casings and separation of the two casings causes the switch 10 to assume a non-conducting position with the circuit board 10. Once this occurs the device can only be reactivated in a predetermined secure manner. Often the device must be returned to an authorized repair facility.

The tamper switch 10 as shown in Figure 1 is partially located within a guard pocket 20 of the casing. This guard pocket receives the various components of the tamper switch arrangement including part of the outer sleeve 34, the compressible ring 30, the displaceable actuator 32 and the force transfer washer 36. The outer protecting sleeve 34 acts as a guard wall protecting the displaceable actuator essentially confined within the outer protecting sleeve. Preferably, the outer protecting sleeve is a stainless steel ring or other suitable high strength material that is difficult to damage. It can also be appreciated that the ring extends essentially to the surface of the circuit 8 with a thin insulating flange 62 of resilient material provided between the bottom of the protecting sleeve and circuit board 8.

Preferably, the compressible ring 30 and the displaceable actuator 32 are of an integral construction joined by means of the connecting body 60. The thin flange 62 is provided at the bottom of connecting body 60. The connecting is of a tubular shape. The connecting body 60 includes an annular bridging segment 64 that serves to locate and provide a partial spring bias for the displaceable actuator 32. The displaceable actuator 32 extends essentially from the compression ring end of the molded component to a non-compressed position a predetermined distance short of the opposite ends of the molded component. The displaceable actuator 32 includes a carbon conducting surface 38 at one end thereof for electrical engagement with the circuit board 8. In the non-compressed state the conducting surface is spaced a certain distance from the circuit board.

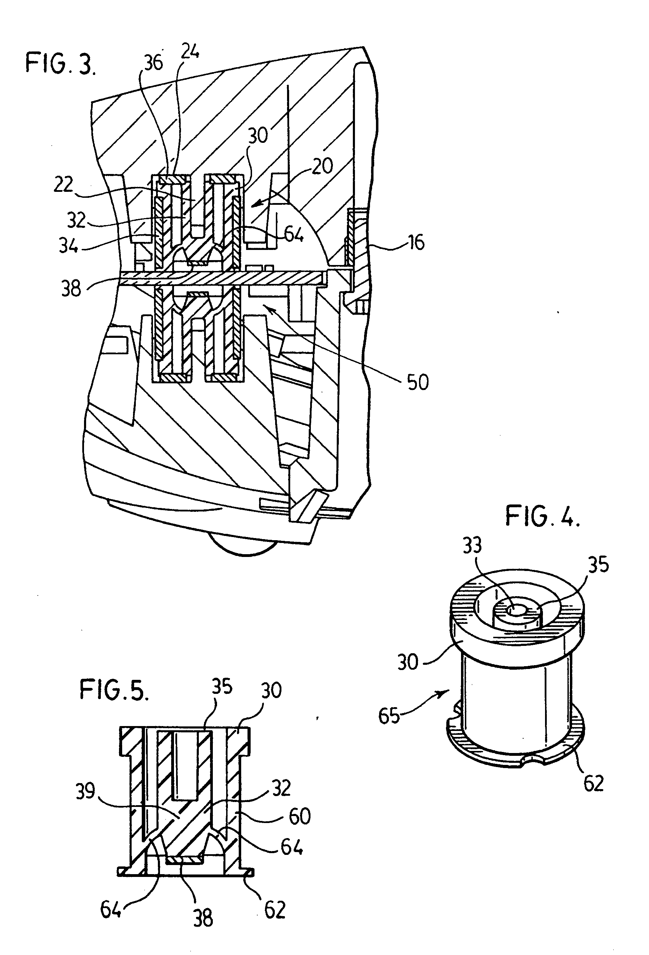

As shown in Figure 3, in addition to the guard pocket 20, the casing includes an aligning pin 22 which is received within the open cylinder portion 33 of the displaceable actuator 32. This assists in locating the conducting surface 38 on the circuit board 8 secured in the casings. The aligning pin 22 also compresses the resilient material 39 of the displaceable actuator 32 located between the end of pin 22 and conducting surface 38.

The displaceable actuator 32 as illustrated in Figures 4 and 5 is positioned within the connecting body 60 and is displaceable within the body by means of flexing of the bridge segment 64. The bridge segment provides a spring bias urging the displaceable member 32 to the position shown in Figure 5. Unloading of the compression of the compressible ring 30 and resilient material 39 associated with aligning pin 22 produces axial expansion thereof and a corresponding movement of the displaceable actuator 32. The resilient component 65 is molded of a resilient material and serves several functions. This member includes the compression ring 30 that accommodates tolerances and also provides a bias force on the protecting sleeve 34. The component also provides and retains the displaceable member in a protected central location. It also provides the compression region 39 of the displaceable actuator. The component 65 also serves to capture and retain the sleeve and provide an insulating layer therebelow. It also provides a friction engagement with the guard pocket by deformation of ring 30 and friction engagement between recess 35 and the alignment pin 22.

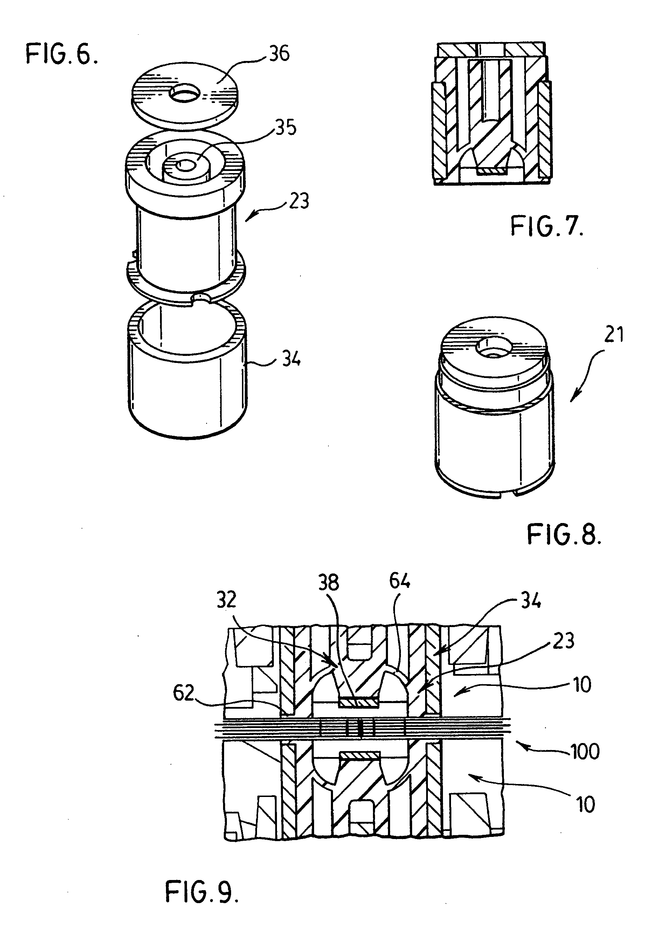

Assembly of the tamper switch actuator arrangement 21 is generally shown in Figure 8. The molded member 23 is inserted into the outer protecting sleeve 34 and the force transfer washer 36 is located over both the compressible ring 30 and the end 35 of the displaceable actuator 32. The thin flange 62 is positioned below the bottom edge of the outer protecting sleeve 34. Basically, the compressible ring 30 provides the spring bias resistance to the final positioning of the outer casings, and this member is of a resilient compressible material such as silicon elastomeric TPE. This resilient compression makes it very difficult to gain access to the displaceable actuator. Pin 22 pushes the conducting surface 38 into contact with the circuit board. The compression of the outer surface, the stiff outer sleeve, and the thin flange protects the conducting surface 38 from mechanical intrusion.

The compressible ring 30 acts upon the protecting sleeve 34 and assures contact of the thin flange 62 with the circuit board. Various guard rings of the circuit board can be provided exterior to the outer sleeve. With this arrangement it is difficult to gain unauthorized access to the displaceable actuator 32 to hold it in a conducting position. As soon as the casings start to separate the compressible ring 30 expands and the pin 22 moves away from the circuit board allowing displaceable actuator 32 to move away from the circuit board as the compression force is reduced.

This arrangement, with the displaceable actuator 32 suspended within the connecting body 60 or relative to the compression ring 30, is particularly effective when used in an opposed relationship as shown in Figure 3. Preferably, the various connections to the switch contacts on the circuit board can be interior to the board.

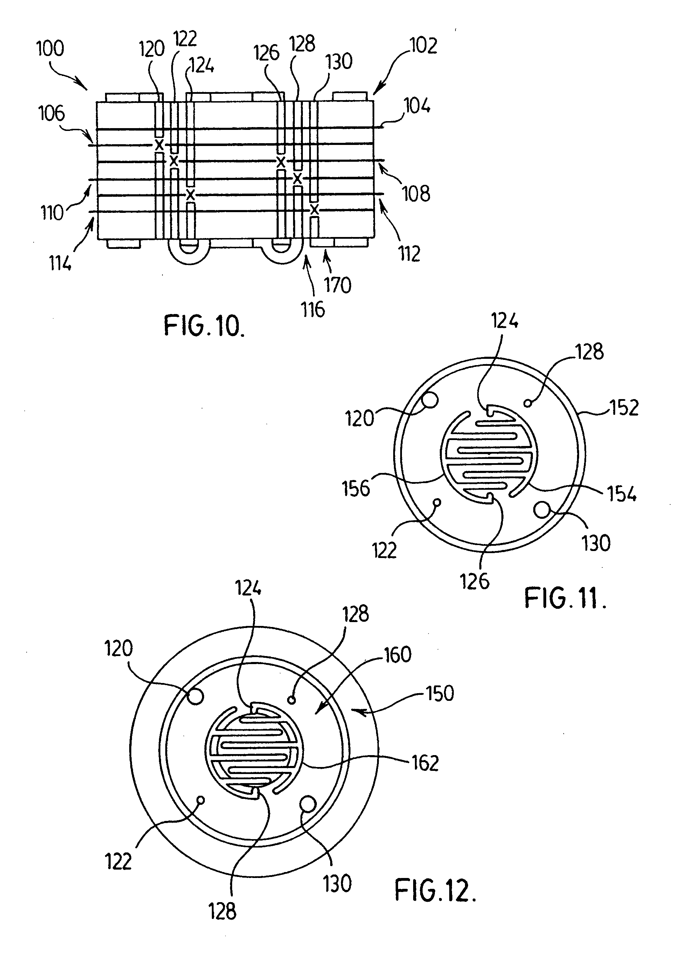

Figure 9 shows two tamper switches 10 on opposite sides of a circuit board 100. The circuit board 100 includes a plurality of via holes shown as 120, 122, 124, 126, 128 and 130 in the simplified illustrative view of Figure 10. The via holes are all located within and protected by the two tamper switches 10. As previously described the tamper switches 10 include the outer protecting sleeve 34 which is exterior to the various via holes. Thus, the opposed tamper switches form a barrier that surrounds the various via holes 120 through 130.

As shown in the sectional view of Figure 10, the circuit board 100 has a top layer identified as 102, a general signal layer 104, a ground playing layer 106, a secure layer 1 108, a secure layer 2 110, a secure mesh layer 112, a power plain 114 and a bottom layer 116.

The particular construction of the circuit board can vary considerably depending upon the particular purpose. In the present case, as shown in Figure 11, the top surface includes a guard ring 152 connected to the via hole 120. As shown in Figure 10, the via hole 120 is connected to the ground plain 106. The top surface also includes trace element 154 connected to the via hole 124 which is shown in Figure 10 as connected to the secure mesh layer 112.

Figure 12 shows an outer order layer 150 which would generally correspond with the outer protective sleeve 34. Thus it can be seen that the via holes 120 through 130 are all located interior to this outer protecting ring. In this way, unauthorized access to the various via holes is denied.

From Figure 10 it can be appreciated that via hole 122 serves to connect the secure mesh layer 112 with one of the inner trace patterns and via hole 128 serves to connect the other bottom trace element to the secure layer 2. These inner trace elements are connected by the bottom actuator provided on the underside of the circuit board 100. In this case, the outer guard ring shown as 170 is connected to the via hole 130 and forms an electrical connection with the power plain 114.

From a review of Figures 9 through 12, and the earlier Figures, it can be appreciated that the use of this particular tamper switch in opposed relationship with a further tamper switch, and providing a series of via holes through the circuit board allows simplified electrical connection and protects the device from possible tampering as the various via holes are all located interior to the outer protective sleeves 34 of the tamper switches. Thus the circuit board can be manufactured in a simplified manner and the use of open via holes is possible due to the cooperation with the tamper switches.

It can also be appreciated from a consideration of the schematics that the guard rings on the top and bottom layers have been effectively reversed and provide a further deterrent to unauthorized access.

It has been found that this arrangement allows a certain amount of compression of the ring to accommodate tolerance variations of the casing and the pockets of the casing. It is important that the tamper switch arrangement responds quickly to separation of the casing but it is also important that this switch is acceptable for plastic molded components that are subject to acceptable tolerance variations. It has been found that this particular arrangement works effectively. The casings are preferably an injection molded polycarbonate or other relative stiff high strength plastic.

As shown in the drawings, the compressible ring 30 is in the guard pocket and located between the end of the protecting sleeve 34 and the force transfer washer 36. The displaceable actuator 32 receives the aligning pin 22 that additionally functions to compress actuator 32. The actuator 32 includes the bridge segment 64 which forms a cup about the actuator 32. This protects the electrical conducting surface from an infusion of silver ink in an attempt to defeat the switch.

The washer and the sleeve with the compression layer within the guard pocket allows for tolerance variations that occur, particularly with the casings.

A further advantage of the switch is with respect to its ability to remain assembled. The outer protective sleeve remains captured on the compressible ring 30. The ring 30 can engage the sides of the guard pocket and the alignment pin 22 can frictionally engage and be retained within the recessed end of the displaceable actuator. The actuator is able to act generally independent of the outer sleeve. The arrangement makes assembly of tamper switch arrangements on opposite sides of a PCB board convenient. It also avoids the need for adjustment of the position of the switches.

## Claims

1. A tamper switch actuator arrangement (10) comprising a resilient compressible member (30), a displaceable contact member (32) with an electrical conducting surface (38) at one end thereof, a stiff outer sleeve (34) provided about said displaceable contact member (32), said compressible member (30) in a non-compressed state causing said displaceable member (32) to assume a non-conducting state within said outer sleeve (34), said displaceable member (32) during compression of said resilient compressible member (30) moving within said outer sleeve (34) to a conducting position adjacent a second end of said outer sleeve (34) when an axial force is applied to an end of said displaceable contact member (32) opposite said electrical conducting surface (38), **characterised in that** a first end of said stiff outer sleeve (34) is forming a support surface for said resilient compressible member (30) during compression thereof.

2. A tamper switch actuator arrangement (10) as claimed in Claim 1 wherein an end of said displaceable contact member (32) opposite said conducting surface (38) in a non- compressed state of said resilient compressible member (30) is generally coplanar with an end surface of said compressible member (30).

3. A tamper switch actuator arrangement (10) as claimed in Claim 1 wherein said resilient compressible member (30) is integral with said displaceable contact member (32).

4. A tamper switch actuator arrangement (10) as claimed in Claim 3 wherein said displaceable contact member (32) includes a cylindrical body portion freely moveable axially within said outer sleeve (34).

5. A tamper switch actuator arrangement as claimed in Claim 4 wherein said displaceable contact member (32) is of a length less than the length of said outer sleeve (34).

6. A tamper switch actuator arrangement (10) as claimed in Claim 4 wherein said cylindrical body portion is closed at one end by said conducting surface.

7. A tamper switch actuator arrangement (10) as claimed in Claim 1 including a force transfer washer (36) positioned to one side of said compressible member (30) and said displaceable contact member (32) whereby said compressible member (30) is located between said force transfer washer (36) and said outer sleeve (34).

8. A tamper switch actuator arrangement (10) as claimed in Claim 7 wherein said compressible member (30) and said displaceable contact member (32) are integral and are joined by a tubular body portion (60) positioned within and in contact with said outer sleeve in combination with a thin web spring arrangement joining said tubular body portion and said displaceable member and biasing said displaceable member towards said non-conducting position, said displaceable member being generally centered within said tubular body portion.

9. A tamper switch actuator arrangement (10) as claimed in claim 1 wherein said displaceable contact member (32) includes a compressible region (64) above said electrical conducting surface (38) that when compressed provides a bias force for said electrical conducting surface (38).

10. A tamper switch actuator arrangement (10) as claimed in claim 9 wherein said displaceable contact member (32) includes a recess (33) for receiving a pin actuator (22) at an end thereof opposite said electrical conducting surface (38).

11. In combination a circuit board (8)and an opposed pair of tamper switch actuator arrangements (10) as claimed in any one of claims 1 to 10, said circuit board having opposed security trace elements on opposite sides thereof and a plurality of via holes selectively connecting said trace elements to electrical circuits of said circuit board; each tamper switch accuator arrangement having said displaceable contact member electrically connecting said trace elements in contact therewith, and wherein said tamper switch actuator arrangments collectively cover said via holes.

12. In combination as claimed in claim 11 wherein said outer sleeve of each tamper switch actuator arrangement provides a peripheral barrier about said trace elements and said via holes.

13. In combination as claimed in claim 12 wherein said circuit board includes at least 4 via holes and each tamper switch actuator arrangement is independent of the other tamper switch actuator arrangement and is only electrically conductive with trace elements on one side of the circuit board.

14. In combination as claimed in claim 13 wherein said circuit board has at least four layers.

15. A tamper switch arrangement as claimed in any one of claims 1 to 10 in combination with a circuit board having contact surfaces electrically connected when said resilient compressible member is in a compressed state.

## Patentansprüche

1. Betätigungsanordnung (10) für einen Sicherheitsschalter, umfassend ein elastisches komprimierbares Glied (30), ein verlagerbares Kontaktglied (32) mit einer elektrisch leitenden Oberfläche (38) an einem Ende davon, eine steife äußere Hülse (34), die auf dem verlagerbaren Kontaktglied (32) angebracht ist, wobei das komprimierbare Glied (30) in einem nicht komprimierten Zustand das verlagerbare Glied (32) dazu veranlasst, einen nicht leitenden Zustand innerhalb der äußeren Hülse (34) einzunehmen, wobei das verlagerbare Glied (32) bei Kompression des elastischen komprimierbaren Glieds (30) sich innerhalb der äußeren Hülse (34) zu einer leitenden Position benachbart einem zweiten Ende der äußeren Hülse (34) bewegt, wenn eine axiale Kraft auf ein der elektrisch leitfähigen Oberfläche (38) entgegengesetztes Ende des verlagerbaren Kontaktglieds (32) aufgebracht wird,
**dadurch gekennzeichnet, dass** ein erstes Ende der steifen äußeren Hülse (34) eine Stützfläche für das elastische komprimierbare Glied (30) während seiner Komprimierung bildet.

2. Betätigungsanordnung (10) für einen Sicherheitsschalter nach Anspruch 1, wobei ein Ende des verlagerbaren Kontaktglieds (32) gegenüber der leitenden Oberfläche (38) in einem nicht komprimierten Zustand des elastischen komprimierbaren Glieds (30) üblicherweise koplanar mit einer Endoberfläche des komprimierbaren Glieds (30) ist.

3. Betätigungsanordnung (10) für einen Sicherheitsschalter nach Anspruch 1, wobei das elastische komprimierbare Glied (30) integral mit dem verlagerbaren Kontaktglied (32) ist.

4. Betätigungsanordnung (10) für einen Sicherheitsschalter nach Anspruch 3, wobei das verlagerbare Kontaktglied (32) einen zylindrischen Körperabschnitt umfasst, der axial innerhalb der äußeren Hülse (34) frei bewegbar ist.

5. Betätigungsanordnung (10) für einen Sicherheitsschalter nach Anspruch 4, wobei das verlagerbare Kontaktglied (32) eine Länge aufweist, die geringer ist als die Länge der äußeren Hülse (34).

6. Betätigungsanordnung (10) für einen Sicherheitsschalter nach Anspruch 4, wobei der zylindrische Körperabschnitt an einem Ende durch die leitende Oberfläche abgeschlossen ist.

7. Betätigungsanordnung (10) für einen Sicherheitsschalter nach Anspruch 1, umfassend eine Kraftübertragungsscheibe (36), die auf einer Seite des komprimierbaren Glieds (30) und des verlagerbaren Kontaktglieds (32) angeordnet ist, wobei das komprimierbare Glied (30) zwischen der Kraftübertragungsscheibe (36) und der äußeren Hülse (34) angeordnet ist.

8. Betätigungsanordnung (10) für einen Sicherheitsschalter nach Anspruch 7, wobei das komprimierbare Glied (30) und das verlagerbare Kontaktglied (32) integral sind und durch einen rohrförmigen Körperabschnitt (60) miteinander verbunden sind, der dazwischen angeordnet ist und in Kontakt steht mit der äußeren Hülse in Kombination mit einer dünnwandigen Federanordnung, die den rohrförmigen Körperabschnitt und das verlagerbare Glied verbindet und das verlagerbare Glied in Richtung zu der nicht leitenden Position vorspannt, wobei das verlagerbare Glied üblicherweise innerhalb des rohrförmigen Körperabschnitts zentriert ist.

9. Betätigungsanordnung (10) für einen Sicherheitsschalter nach Anspruch 1, wobei das verlagerbare Kontaktglied (32) einen komprimierbaren Bereich (64) über der elektrisch leitenden Oberfläche (38) umfasst, so dass dann, wenn dieser komprimiert wird, er eine Federkraft für die elektrisch leitende Oberfläche (38) bereitstellt.

10. Betätigungsanordnung (10) für einen Sicherheitsschalter nach Anspruch 9, wobei das verlagerbre Kontaktglied (32) eine Ausnehmung (33) zum Aufnehmen eines Stiftaktuators (22) an einem Ende davon umfasst, das der elektrisch leitenden Oberfläche (38) gegenüberliegt.

11. In Kombination eine Leiterplatte (8) und ein entgegengesetztes Paar von Betätigungsanordnungen (10) für einen Sicherheitsschalter nach einem der Ansprüche 1 bis 10, wobei die Leiterplatte gegenüberliegende Sicherheitsspurenelemente auf gegenüberliegenden Seiten davon und eine Vielzahl von Durchbohrungen hat, die selektiv die Spurenelemente mit elektrischen Kreisen der Leitplatte verbinden; wobei jede Betätigungsanordnung eines Sicherheitsschalters ein verlagerbares Kontaktglied hat, das die Spurenelemente in Kontakt damit elektrisch verbindet, und wobei die Betätigungsanordnungen eines Sichreheitsschalters kollektiv die Durchbohrungen abdecken.

12. In Kombination nach Anspruch 11, wobei die äußere Hülse jeder Betätigungsanordnung eines Sicherheitsschalters eine periphere Barriere über die Spurenelemente und die Durchbohrungen bereitstellt.

13. In Kombination nach Anspruch 12, wobei die Leiterplatte wenigstens vier Durchbohrungen umfasst und jede Betätigungsanordnung eines Sicherheitsschalters unabhängig von der anderen Betätigungsanordnung eines Sicherheitsschalters ist und nur elektrisch leitend mit den Spurenelementen auf einer Seite der Leiterplatte ist.

14. In Kombination nach Anspruch 13, wobei die Leiterplatte wenigstens vier Schichten hat.

15. Betätigungsanordnung nach einem der vorhergehenden Ansprüche 1 bis 10 in Kombination mit einer Leiterplatte, die Kontaktflächen hat, die elektrisch verbunden sind, wenn das elastische komprimierbare Glied in einem komprimierten Zustand ist.

## Revendications

1. Agencement d'actionnement (10) pour un interrupteur de protection comportant un organe compressible élastique (30), un élément de contact mobile (32) ayant une surface électriquement conductrice (38) à une de ses extrémités, un manchon extérieur rigide (34) disposé autour dudit élément de contact mobile (32), ledit organe compressible élastique (30), dans un état non comprimé, engageant ledit élément de contact mobile (32) à assumer un état non conducteur à l'intérieur dudit manchon extérieur (34), ledit élément mobile (32), pendant la compression dudit organe compressible élastique (30), se déplaçant à l'intérieur dudit manchon extérieur (34), vers une position conductrice adjacente à une seconde extrémité dudit manchon extérieur (34), lorsqu'une force axiale est appliquée sur l'une des extrémités dudit élément de contact mobile (32) opposée à ladite surface électriquement conductrice (38), **caractérisé en ce qu'**une première extrémité dudit manchon extérieur rigide (34) forme une surface de support pour ledit élément compressible élastique (30) pendant sa compression.

2. Agencement d'actionnement (10) pour un interrupteur de protection selon la revendication 1, dans lequel une extrémité dudit élément de contact mobile (32), opposé à ladite surface conductrice (38), dans un état non comprimé dudit organe compressible élastique (30), est généralement coplanaire audit organe compressible élastique (30).

3. Agencement d'actionnement (10) pour un interrupteur de protection selon la revendication 1, dans lequel ledit organe compressible élastique (30) est intégré audit élément de contact mobile (32).

4. Agencement d'actionnement (10) pour un interrupteur de protection selon la revendication 3, dans lequel ledit élément de contact mobile (32) comporte une portion de corps cylindrique qui est librement mobile axialement à l'intérieur dudit manchon extérieur (34).

5. Agencement d'actionnement (10) pour un interrupteur de protection selon la revendication 4, dans lequel ledit élément de contact mobile (32) a une longueur inférieure à celle dudit manchon extérieur (34).

6. Agencement d'actionnement (10) pour un interrupteur de protection selon la revendication 4, dans lequel ladite portion de corps cylindrique est disposée à proximité de l'une des extrémités de ladite surface conductrice.

7. Agencement d'actionnement (10) pour un interrupteur de protection selon la revendication 1, comportant un joint de transfert de force (36) disposé d'un côté dudit organe compressible élastique (30) et ledit contact mobile (32), de sorte que ledit organe compressible élastique (30) est disposé entre ledit joint de transfert de force (36) et ledit manchon extérieur (34).

8. Agencement d'actionnement (10) pour un interrupteur de protection selon la revendication 7, dans lequel ledit organe compressible élastique (30) et ledit contact mobile (32) sont réalisés d'une pièce et sont reliés par une portion de corps tubulaire (60) positionné dans et en contact avec ledit manchon extérieur (34) en combinaison avec un petit arrangement à ressort qui couple ladite portion de corps tubulaire et ledit élément mobile et qui sollicite ledit élément mobile vers la position non conductrice, ledit élément mobile étant généralement centré à l'intérieur de ladite portion de corps tubulaire.

9. Agencement d'actionnement (10) pour un interrupteur de protection selon la revendication 1, dans lequel ledit élément contact mobile (32) comporte une zone de compression (64) au-dessus de ladite surface électriquement conductrice (38), qui, lorsqu'elle est comprimée, produit une force de précontrainte sur ladite surface électriquement conductrice (38).

10. Agencement d'actionnement (10) pour un interrupteur de protection selon la revendication 9, dans lequel ledit élément contact mobile (32) comporte un évidement (33) pour loger un actionneur sous forme d'une goupille (22) à une de ses extrémités opposée à ladite surface électriquement conductrice (38).

11. En combinaison, un tableau de circuit (8) et une paire d'agencements d'actionnement (10) pour un interrupteur de protection selon l'une quelconque des revendications 1 à 10, ledit tableau de circuit comportant des éléments trace de sécurité opposés, disposés sur des côtés opposés du tableau et une pluralité de cavités de raccordement pour connecter lesdits éléments traces à des circuits électriques dudit tableau de circuit ; chaque agencement d'actionnement (10) pour un interrupteur de protection ayant ledit élément contact mobile connecté électriquement audit élément trace et raccordé à lui, et dans lequel lesdits agencements d'actionnement (10) pour interrupteur de protection englobent lesdites cavités de raccordement.

12. En combinaison selon la revendication 11, dans laquelle ledit manchon extérieur de chaque agencement d'interrupteur produit une barrière périphérique autour des éléments trace et lesdites cavités de connexion.

13. En combinaison selon la revendication 12, dans laquelle ledit tableau de circuit comporte au moins quatre cavités de connexion et chaque agencement d'actionnement pour un interrupteur de protection est indépendant des autres agencements d'actionnement pour un interrupteur de protection et est uniquement conducteur avec les éléments trace d'un côté du tableau de circuit.

14. En combinaison selon la revendication 13, dans laquelle ledit tableau de circuit a au moins quatre couches.

15. Agencement d'actionnement (10) pour un interrupteur de protection selon l'une quelconque des revendications 1 à 10 en combinaison avec un tableau de circuit ayant des surfaces de contact électriquement connectées lorsque l'organe élastique compressible est dans un état comprimé.
